Europäisches Patentamt

European Patent Office

Office européen des brevets

(19)

(11) Veröffentlichungsnummer: **0 312 961 B1**

(12) **EUROPÄISCHE PATENTSCHRIFT**

(45) Veröffentlichungstag der Patentschrift: **26.08.92**

(51) Int. Cl.5: **A61G 5/00**, B62B 5/00

(21) Anmeldenummer: **88117252.2**

(22) Anmeldetag: **17.10.88**

(54) **Mit einem Rollstuhl kuppelbares Raupenfahrwerk.**

(30) Priorität: **20.10.87 AT 2764/87**

(43) Veröffentlichungstag der Anmeldung:
**26.04.89 Patentblatt 89/17**

(45) Bekanntmachung des Hinweises auf die
Patenterteilung:
**26.08.92 Patentblatt 92/35**

(84) Benannte Vertragsstaaten:
**AT CH DE FR GB IT LI**

(56) Entgegenhaltungen:
**CH-A- 608 436**
**DE-A- 3 303 817**
**GB-A- 2 191 455**
**GB-A- 2 199 291**

(73) Patentinhaber: **Lehner, Max**
**Weinzierlbruck 24**
**A-4731 Prambachkirchen(AT)**

(72) Erfinder: **Lehner, Max**
**Weinzierlbruck 24**
**A-4731 Prambachkirchen(AT)**

(74) Vertreter: **Popp, Eugen, Dr. et al**
**MEISSNER, BOLTE & PARTNER Widenmayer-**
**strasse 48 Postfach 86 06 24**
**W-8000 München 86(DE)**

**Beschreibung**

Die Erfindung betrifft ein mit einem Rollstuhl kuppelbares Raupenfahrwerk, insbesondere für das Befahren von Treppen und Auffahrtrampen, dessen die motorisch antreibbaren Raupen aufweisender und zwischen die Haupträder des Rollstuhles passender Fahrwerkteil mit einem Adapter zur Befestigung des Rollstuhles in einer nach hinten gekippten Fahrstellung, in der die Rollstuhlräder vom Boden abgehoben sind, verbunden ist.

Eine derartige Rollstuhl-Raupenfahrwerkombination ist aus der CH-A 608 436 bekannt. Sie hat den Vorteil, daß die Verbindung zwischen den beiden Elementen nur im Bedarfsfall hergestellt wird und der Rollstuhlbenützer die Möglichkeit hat, den Rollstuhl fur sich allein zu verwenden. Dabei braucht der Rollstuhlfahrer beim An- und Abkuppeln an das bzw. vom Fahrwerk den Rollstuhl nicht zu verlassen. Vorzugsweise werden Raupenfahrwerke mit stark profilierten Raupen aus Gummi oder gummiähnlichem Kunststoffmaterial verwendet, wobei zwei Raupen vorgesehen sind, die gesondert über Elektromotoren und Getriebe antreibbar sind, wobei die Fahrgeschwindigkeit und Fahrtrichtung gesondert und gemeinsam einstellbar ist. Für die Energieversorgung werden meist eine oder mehrere aufladbare Batterien verwendet. Der Einsatz entsprechender Raupenfahrwerke gibt dem Rollstuhlfahrer eine größere Mobilität als die Verwendung eines immer stationären, d. h. an Treppe oder Gebäude gebundenen Aufzuges oder Treppenliftes, dessen nachträglicher Einbau in bestehende Gebäude überdies problematisch ist. Da mit dem Raupenfahrzeug meist nur kurze Wegstrecken zurückgelegt werden, kann es leicht gebaut sein und es ist auch die erzielbare Fahrgeschwindigkeit nicht kritisch. Auch eine Mitnahme in Kraftfahrzeugen ist möglich.

Bei einem bekannten unter der Bezeichnung "Treppen-Kuli" angebotenen Raupenfahrwerk der gegenständlichen Art ist der gesamte Adapter am Fahrwerk um eine Querachse schwenkbar gelagert und in verschiedenen Schwenkstellungen feststellbar. Der Rollstuhl wird mit der Rückenlehne an den in etwa vertikaler Lage befindlichen Adapter herangefahren und mit dem Adapter über Klemmen od. dgl. verbunden. Durch Kippen des Adapters mit dem befestigten Rollstuhl wird zufolge einer entsprechenden Anordnung der Kippachse erreicht, daß die Rollstuhlräder in der Kipplage vom Boden abheben, so daß sich der Rollstuhl über den Adapter nur mehr auf das Raupenfahrwerk abstützt. Vorzugsweise ist der Adapter bis etwa zur Kopfhöhe des Rollstuhlfahrers über die Rückenlehne hinaus hochgezogen und mit Handgriffen ausgestattet, über die er verschwenkt werden kann, wobei im Bereich dieser Handgriffe auch Steuerorgane zum Ein- und Ausschalten der Antriebsmotoren und zur Regelung der Antriebsgeschwindigkeit vorgesehen sind. Das Kippen des Rollstuhles ist notwendig, damit der Sitz des Rollstuhles beim Befahren einer Treppe oder einer sonstigen stärkeren Steigung sich nicht nach vorne neigt. Gleichgültig, ob eine Treppe hinauf oder hinunter befahren wird, blickt der Rollstuhlfahrer treppenabwärts. Das bekannte Raupenfahrwerk kann nur von einer Hilfsperson mit dem Rollstuhl gekuppelt werden und es ist auch grundsätzlich vorgesehen, daß diese Hilfsperson das Fahrwerk betätigt und steuert. Damit ist der Rollstuhlfahrer für den Einsatz des Raupenfahrwerkes grundsätzlich auf fremde Hilfe angewiesen. Beim Lenken des Fahrwerkes ergeben sich auch für die Hilfsperson Probleme, da das Raupenfahrwerk während des Lenkvorganges am Boden aufliegt und die Hilfsperson zum Lenken hinter dem gekippten Rollstuhl stehen muß, um die Handhabung betätigen zu können. Bei engen Stiegen oder Stiegen mit nur kleinen Absätzen ist aus diesen Gründen häufig ein Einsatz der bekannten Fahrwerke unmöglich.

Aufgabe der Erfindung ist die Schaffung eines Raupenfahrwerkes, das vom Rollstuhlfahrer selbst, ohne daß dieser den Rollstuhl verlassen muß, an- und abgekuppelt und gesteuert werden kann, so daß der Rollstuhlfahrer nicht mehr auf fremde Hilfe angewiesen ist. Eine Teilaufgabe der Erfindung besteht darin, eine Konstruktion zu schaffen, die gegenüber der bekannten Ausführung eine wesentlich erhöhte Wendigkeit aufweist.

Ein erfindungsgemäßes Raupenfahrwerk zeichnet sich dadurch aus, daß der eine Einfahrkupplung für eine entsprechende, am Rollstuhl angebrachte Gegenkupplung aufweisende Adapter mit dem Fahrwerksteil über eine Hubeinrichtung verbunden ist, die vom Rollstuhlfahrer über Betätigungs- oder Steuerorgane wahlweise im Sinne eines Anhebens des Rollstuhles gegenüber dem Fahrwerk und im Sinne eines Abhebens des Fahrwerkes bei am Boden verbleibenden Rollstuhlrädern, sowohl bei in der normalen als auch bei in der gekippten Fahrstellung befindlichem Rollstuhl betätigbar ist.

Ein herkömmlicher Rollstuhl hat eine wesentlich größere Wendigkeit als ein Raupenfahrwerk, soferne man nicht eine sehr komplizierte Antriebs- und Steuereinrichtung für das Raupenfahrwerk, die das Gesamtgewicht und den Preis entscheidend erhöht, in Kauf nehmen will. Durch die erfindungsgemäße Ausführung wird es nun dem Rollstuhlfahrer möglich, das Raupenfahrwerk wahlweise anzuheben und engere Wendungen oder Fahrtrichtungsänderungen um enge Kurven oder um Ecken herum durch gesteuerte Betätigung des Rollstuhles selbst durchzuführen. Auch dann, wenn zwischen zwei Einsätzen des Raupenfahrwerkes nur kürzere Fahrtstrecken zurückzulegen sind, ist die erfindungsgemäße Anordnung von Vorteil, da der Rollstuhlfahrer die Möglichkeit hat, solche kürzere Fahrstrecken wahlweise mit dem Raupenfahrwerk oder bei am Rollstuhl verbleibendem abgehobenem Raupenfahrwerk durch Betätigung der Rollstuhlräder zurückzulegen. Die erhöhte Wendigkeit in Verbindung mit einer leicht bedienbaren oder selbsttätig einrastenden Einfahrkupplung ermöglicht die Bedienung des Raupenfahrwerkes vom Rollstuhlfahrer allein, der also nicht mehr auf fremde Hilfe angewiesen ist.

Für die Funktionen Kippen des Rollstuhles in beiden Richtungen, Betätigung der Kupplung im Ein- und Auskupplungssinn, Heben des Fahrwerkes und Heben des Rollstuhles, können pneumatische, hydraulische oder elektrische Hilfsantriebe vorgesehen werden, wobei bei Verwendung eines elektrisch angetriebenen Raupenfahrwerkes vorzugsweise mit Elektromotoren ausgestattete Hilfsantriebe, die etwa über Spindeltriebe die notwendigen Verstellungen ausführen, vorsehbar sind und zur Steuerung der gewählten Funktion in Reichweite des Rollstuhlfahrers Steuerorgane z. B. Drucktastenschalter angebracht werden. Entsprechende Ausführungen sind naturgemäß aufwendig und werden daher nur dann sinnvoll vorgesehen werden, wenn der Rollstuhlfahrer so stark behindert ist, daß ihm eine Handbetätigung nicht zugemutet werden kann. Im Sinne einer möglichst einfachen und kostengünstigen Konstruktion wird man danach trachten, alle oder die meisten der erwähnten Funktionen vom Rollstuhlfahrer unter Aufwendung seiner Muskelkraft vornehmen zu lassen. Durch entsprechende Übersetzungen im jeweiligen Verstell- bzw. Antriebszweig können Erleichterungen geschaffen werden. Demgemäß besteht eine bevorzugte Ausführung unter anderem darin, daß für die Hubeinrichtung des Fahrwerkes in Reichweite des Rollstuhlfahrers angebrachte Betätigungshebel vorgesehen sind. Die Hubeinrichtung kann dabei als Hebelwerk ausgebildet sein, das über ein Gesperre in den beiden Hubstellungen (ausgefahrenes und angehobenes Fahrwerk) festgestellt bzw. gesichert werden kann. Das Gesperre wird dabei vorteilhaft als zwei Übertotpunktlagen aufweisendes Übertotpunktgesperre ausgeführt.

Auch die Kippverstellung des Rollstuhles kann von einem normal kräftigen im Gebrauch seiner Hände und Arme nicht übermäßig behinderten Rollstuhlfahrer mit Muskelkraft vorgenommen werden. Dabei kann man am Adapter wenigstens eine etwa horizontal seitlich bis über den Sitzbereich des in der normalen Fahrstellung befindlichen Rollstuhles vorragende, gegebenenfalls abnehmbare Haltestange vorsehen, an der sich der Rollstuhlfahrer festhält und seinen Rollstuhl kippt bzw. zurückkippt. Es ist dabei eine Konstruktion möglich, bei der der Adapter im Gegensatz zur bekannten in der Gesamtheit schwenkbaren Ausführung einen feststehenden, schrägen Stützrahmen zur Abstützung des Rollstuhles in der Kippstellung aufweist, an welchem Stützrahmen selbsttätig einrastende Sicherungshalterungen für die Rollstuhllehne bzw. dort angebrachte Gegenhalter vorgesehen sind, so daß der Rollstuhl am Ende des Kippvorganges in dieser Kipplage gesichert wird. Man kann auch eine stufenweise Voreinstellung der Neigung des Stützrahmens zur Anpassung an verschiedene Stiegen- bzw. Geländesteigungen vorsehen.

Eine besonders einfache und dabei betriebssichere Konstruktion für die Verbindung zwischen Rollstuhl und Fahrwerkteil herstellende Einheit besteht darin, daß die Einfahrkupplung aus wenigstens einem am Adapter angebrachten, sich vorzugsweise zum freien Ende konisch verjüngenden Steckzapfen besteht, auf den in seiner etwa horizontal in Einfahrtrichtung des Rollstuhles weisenden Einkupplungsstellung eine die Gegenkupplung bildende, am Rollstuhl unterhalb des Sitzbereiches angebrachte Aufsteckhülse bis zu einem Anschlag aufsteckbar ist, wobei der Steckzapfen um eine die Kippachse für den Rollstuhl bestimmende Querachse, die vorzugsweise mit größerem Abstand unterhalb der Radachse des Rollstuhles und gegenüber dieser Radachse nach hinten versetzt angeordnet ist, schwenkbar lagert und am Adapter in einem Kreisbogen um die genannte Schwenkachse eine Führungsbahn für einen vorzugsweise von einer Laufrolle oder einem Kugellager gebildeten, am Rollstuhl vorgesehenen Anschlag angebracht ist, der in der Kupplungsstellung von Steckzapfen und Aufsteckhülse und während der Kippbewegung mit dieser Führungsbahn in Eingriff steht und Bolzen und Hülse in der Einkupplungsstellung und damit den Rollstuhl am Adapter sichert. Dieser Anschlag kommt mit der Führungsbahn sowohl beim Kippen des Rollstuhles als auch beim Anheben des Fahrwerkes gegenüber dem Rollstuhl in Dauereingriff, so daß mit einfachsten Mitteln eine betriebssichere Verbindung von Rollstuhl und Fahrwerk hergestellt ist, die einfach durch Ausfahren des Rollstuhles vom Fahrwerk wieder gelöst werden kann.

Um die Wendigkeit der Einheit Rollstuhl-Fahrwerk zu gewährleisten, wird man die Gesamtlänge des Fahrwerkes nicht wesentlich größer als die übliche Länge eines Rollstuhles mit Fußstütze wählen, wobei die gekippte Rückenlehne mit ihrem oberen Ende etwa über dem zugeordneten Fahrwerksende zu liegen kommt. An diesem Fahrwerksende wird man die Raupen schräg nach außen/oben führen, damit sie sicher an den Kanten von Treppenstufen greifen können. Nach einer Weiterbildung der Erfindung ist nun vorgesehen, daß am Fahrwerk bzw. Adapter vor dem unter der Rückenlehne des gekippten Rollstuhles liegenden Fahrwerkende bzw. unter dem Ende des schräg ansteigenden Raupenbereiches wenigstens eine über einen Stelltrieb an den Boden anstellbare Stützrolle angebracht ist. Diese Stützrolle kann mehrfache Funktionen erfüllten. Zunächst gibt sie dem Benützer die Sicherheit, daß die Fahrwerk-Rollstuhleinheit bei einem raschen Verstellen des Rollstuhles in die Kipplage nicht ein Übergewicht nach hinten bekommt. Ein wesentliches Einsatzgebiet der Stützrolle ist jedoch bei gekipptem Rollstuhl und angehobenem Fahrwerk gegeben. In dieser Lage wäre der allein auf seinen Hauptträdern abgestützte Rollstuhl instabil. Abgesehen davon ermöglicht es die Stützrolle im letzteren Fall, den Rollstuhl mit dem angehobenen Fahrwerk durch Vordrehen des einen und Rückdrehen des anderen Hauptrades praktisch am Platz zu wenden, ohne daß für diesen Wendevorgang komplizierte Raupensteuerungen notwendig sind. Die Rollstuhl-Fahrwerkeinheit hat bei gekipptem Rollstuhl, angehobenem Fahrwerk und ausgefahrener Rolle sogar eine größere Wendigkeit als ein Rollstuhl allein. Der Benützer hat dadurch die Möglichkeit, die Einheit genau zu manövrieren und auch enge Stiegen mit kleinen Stiegenabsätzen zu befahren. Das Manövrieren wird dadurch erleichtert, daß die Stützrolle nach Art eines Sporen- oder Möbelrades um eine stehende Achse schwenkbar angebracht bzw. als Kugelrolle ausgebildet ist.

Zur Vereinfachung der Bedienung und zur Erhöhung der Sicherheit, kann man vorsehen, daß die Stützrolle in bestimmten Betriebszuständen zwangsweise aus- und in anderen Betriebszuständen zwangsweise eingefahren wird. Zu diesem Zweck ist der Stelltrieb der Stützrolle mit dem Kupplungszapfen oder einem eigenen, auf die Kippung und das Anheben oder Absenken des Fahrwerkes empfindlichen Lagefühler für den Rollstuhl antriebsverbunden, so daß er die Stützrolle beim Kippen des Rollstuhles und/oder Anheben des Fahrwerkes bei gekipptem Rollstuhl ausstellt und bei in seiner normalen Fahrstellung befindlichem Rollstuhl bzw. beim Absenken des Fahrwerkes bei gekipptem Rollstuhl vom Boden abhebt.

Bei den bekannten Raupenfahrwerken hat die das Fahrwerk beim Befahren von Stiegen bedienende Hilfsperson die Möglichkeit, insbesondere beim Abwärtsfahren beim Übergang von der ebenen Fahrstrecke auf die Stiege den Adapter nach oben zu drücken und dadurch das Fahrwerk in den Richtungsverlauf der Stiege zu neigen, bevor noch der Gesamtschwerpunkt von Rollstuhlfahrer, Rollstuhl und Fahrwerk über die oberste Stiegenkante bewegt wurde. Auch beim Übertritt des Gesamtschwerpunktes über die erwähnte Kante auftretende Lageänderungen des Gesamtsystems werden von der Hilfsperson unter Krafteinsatz weich abgefangen. Da nun durch die erfindungsgemäße Ausführung der Rollstuhlfahrer die Möglichkeit hat, allein zu fahren, ist anzustreben, daß die erwähnten Kippvorgänge beim Übertritt des Gesamtschwerpunktes über die vom ebenen zum Gefälle führenden Kanten vermieden bzw. gemildert werden. Nach einer Ausführungsvariante weist deshalb das Raupenfahrwerk konkav gebogene Führungsschienen für die in Bodeneingriff stehenden Raupentrume auf, wobei diese Raupentrume entweder den Schienen dauernd folgend geführt werden oder über die Wölbung mit Hilfe eigener Spanneinrichtungen gespannt sind, so daß sie sich nur bei punktförmigen Belastungen an die gewölbten Führungsschienen anlegen. In beiden Fällen wird erreicht, daß beim Überfahren der erwähnten vom ebenen ins Gefälle führenden Kante die Raupe nachgibt, sich also das Fahrwerk bereits in die Stiegenneigung einzustellen beginnt, ehe noch der Gesamtschwerpunkt über die Kante bewegt wurde. Die gleiche Wirkung kann erzielt werden, wenn nach einer anderen Ausbildung der Fahrwerksteil der Länge nach in zwei oder mehrere getrennt antreibbare und um eine Querachse gelenkig miteinander verbundene Raupengruppen unterteilt ist, wobei zumindest die jeweils stiegenabwärts weisende Raupengruppe nach unten geschwenkt werden kann, so daß sie sich im voraus auf die Stiegenneigung einstellt.

Weitere Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht. Es zeigen, jeweils in stark schematisierter Darstellungsweise in Seitenansicht, bei der ein Rollstuhl in strichpunktierten Linien und ein Fahrwerk voll dargestellt ist,

Fig. 1 eine Rollstuhl-Raupenfahrwerkkombination vor dem Herstellen der Kupplungsverbindung,

Fig. 2 die Kombination nach Fig. 1 bei hergestellter Kupplung, gekipptem Rollstuhl, angehobenem Fahrwerk und ausgefahrener Stützrolle,

Fig. 3 die Kombination beim Befahren einer Stiege,

Fig. 4 eine erste Variante der Rollstuhl-Raupenfahrwerkkombination in Seitenansicht mit gegenüber der Ausführungsform gemäß den Fig. 1 - 3 abgewandelter bodenseitiger Führungsschiene für die Raupen,

Fig. 5 - 7 eine weitere Variante der Rollstuhl-Raupenfahrwerkkombination in Seitenansicht unter schematischer Darstellung einer Einrichtung zur Dämpfung der Kippbewegung des Fahrgestells beim Überfahren einer vom Ebenen zum Gefälle bzw. umgekehrt führenden Kante.

Die Raupenfahrwerk-Rollstuhlkombination besteht aus einem Rollstuhl 1, einem Raupenfahrwerk 2 und einem Adapter 3 zum Befestigen und Einstellen des Rollstuhles 1 gegenüber dem Fahrwerk 2.

Beim Ausführungsbeispiel wurde ein üblicher, gegebenenfalls zusammenklappbarer Rollstuhl 1 in seinen Umrissen dargestellt. Der Rollstuhl 1 besitzt einen Sitzteil 4, seitliche Armlehnen 5, eine Fußstütze 6, eine Rückenlehne 7 mit einer Schiebehandhabe 8, Haupträder mit Betätigungsringen 10 und Stützlaufrollen 11.

Das Fahrwerk 2 besitzt untere, am rechten Ende nach oben abgewinkelte Führungsschienen 12, 13 und über Antriebs- und Umlenkräder 14, 15 geführte Raupen 16 aus Gummi oder einem gummiähnlichem Material, wobei für die angetriebenen Räder Elektromotoren mit nachgeschalteten Getrieben vorgesehen sind, die von einer innerhalb des Fahrwerkes 2 angebrachten Batterie versorgt werden. Steuereinheiten zum Ein- und Ausschalten des Fahrwerkes, zur Geschwindigkeitsänderung und zur Laufrichtungsumkehr sind an einer vom Rollstuhlfahrer erreichbaren Stelle angebracht, wurden aber der besseren Übersichtlichkeit halber nicht dargestellt.

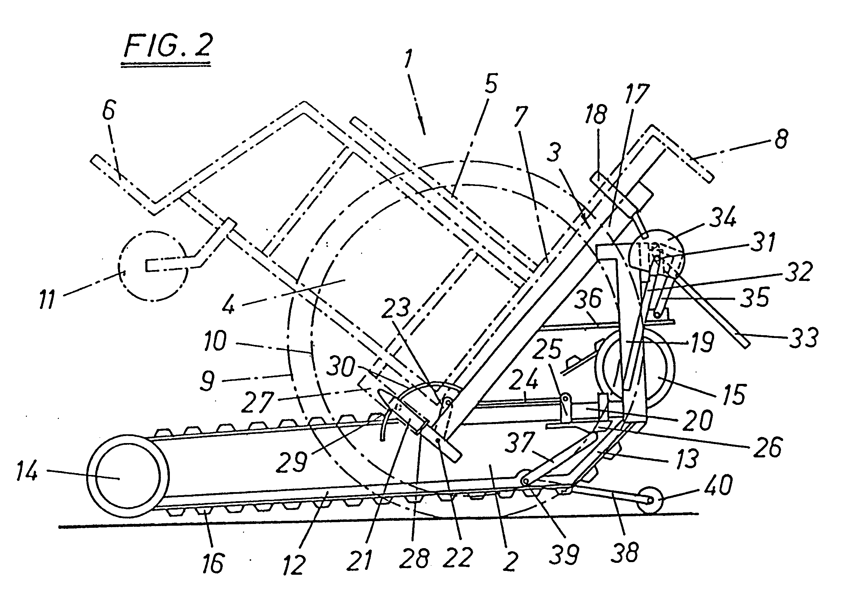

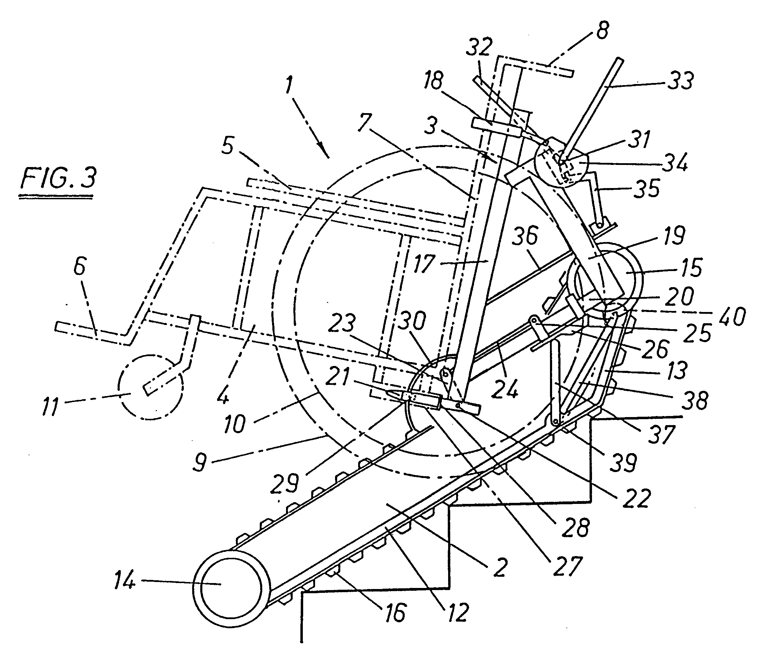

Der Adapter 3 besitzt einen feststehenden Stützrahmen 17, für die Rückenlehne 7 des in der Kippstellung (Fig. 2 und 3) befindlichen Rollstuhles, wobei an diesem Stützrahmen selbst in die Seitenstreben der Rückenlehne 7 einrastende Haltespangen 18 vorgesehen, die durch Handbetätigung gelöst werden können. Der Stützrahmen 17 ist mit einem stehenden Rahmenteil 19 und einer horizontalen auch am Rahmenteil 19 befestigten Führungsstange 20 starr verbunden. Am unteren Ende des Stützrahmens 17 ist ein eine Einfahrkupplung bildender Steckzapfen 21 um eine eine Kippachse für den Rollstuhl bestimmende Querachse 22 schwenkbar gelagert, wobei auf der Achse 22 ein mit dem Zapfen 21 verschwenkbarer Hebel 23 sitzt, der über einen Lenker 24 mit einem Gleiter 25 auf der Führungsstange 20 verbunden ist, welcher Gleiter einen Stellkeil 26 in Abhängigkeit von der Relativschwenkstellung des Zapfens 21 gegenüber dem Rahmen 3 verschiebt.

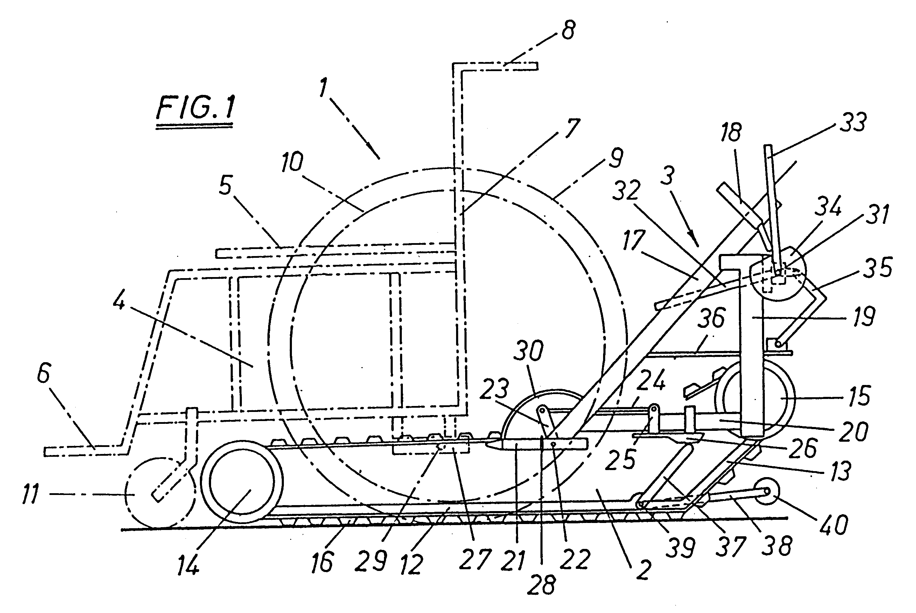

Am Rollstuhl 1 ist unterhalb des Sitzes eine Aufsteckhülse 27 angebracht, die eine Gegenkupplung für den Zapfen 21 bildet. Wird der Rollstuhl aus der Stellung nach Fig. 1 nach rechts verfahren, so gleitet die Hülse 27 unterstützt durch das konische Ende des Zapfens 21 bis zu einem Anschlag 28 auf den Zapfen 21 auf und stellt dadurch eine Steckverbindung zwischen Rollstuhl 1 und Adapter 3 her. Bei aufgesteckter Hülse 27 und damit in der Kupplungsstellung kommt, unter Ausnützung der Nachgiebigkeit der Rollstuhlräder gegebenenfalls über eine Einlaufhilfe, eine als Kugellager ausgebildete Anschlagrolle 29 mit einer Führungsbahn 30 in Eingriff, unter der sie beim Aufstecken durchgetreten ist.

Die Führungsbahn 30 ist in Richtung der Achse 22 gegenüber dem Steckzapfen 21 versetzt und in Form eines Kreisbogens um die Achse 22 angeordnet. Durch den Eingriff des Anschlages 29 mit der Bahn 30 beim Kippen werden die Kupplungsteile 21, 27 im dauernden Eingriff gehalten.

Am Träger 19 ist eine Betätigungswelle 31 gelagert, die über links und rechts herausgeführte, miteinander eine Winkelstellung einnehmende Handhebel 32, 33, von denen jeweils einer leicht vom Rollstuhlfahrer erreichbar ist, verdreht werden kann und auf der eine einseitig abgeflachte Kurbelscheibe 34 sitzt, an der ein Winkelhebel 35 gelenkig angreift. Der Winkelhebel 35 greift an einer Tragplatte 36 an, der im Bereich der Rolle 15 mit dem Fahrwerk 2 in Verbindung steht. Durch Verdrehen der Welle 31 mittels der Handhebel 32 oder 33 wird das Fahrwerk 2 über das Gestänge 35 angehoben bzw. abgesenkt. Es sind dabei die Übertotpunktstellungen der Anlenkstelle des Hebels 35 an der Kurbelscheibe 34 nach den Fig. 2 und 3 möglich. In der Stellung nach Fig. 2 wird das Fahrwerk 2 gegenüber dem in der Kipplage befindlichen Rollstuhl 1 angehoben. Bei diesem Anhebevorgang drückt der Schiebekeil 26 auf einen Hebel 37, mit dem ein weiterer Stellhebel 38 um eine an der unteren Laufschiene 12 vorgesehene Achse 39 schwenkbar verbunden ist, so daß eine in den Stellungen nach Fig. 1 nur angehobene und in der Stellung nach Fig. 3 eingeschwenkte Laufrolle 40 auf dem Boden abgestützt wird. Die Rollstuhl-Laufwerkseinheit stützt sich daher in der Stellung nach Fig. 2 nur mit den Haupträdern 9 und der Rolle 40 am Boden ab, so daß der Rollstuhl mit dem angehobenen Laufwerk 2 durch Betätigung der Räder 9 praktisch am Platz gewendet werden kann. Zur Erleichterung dieses Vorganges kann die Rolle 40 wie eine Möbelrolle um eine senkrechte Achse drehbar angebracht sein.

Beim Ankupplungsvorgang fährt der Rollstuhlfahrer wie beschrieben vom linken Ende nach Fig. 1 mit dem Rollstuhl über das Laufwerk 2 bis die Kupplungen 21, 27 in vollem Eingriff stehen, wobei die Einheit durch den Eingriff der Anschlagrolle 29 in die Führungsbahn 30 gesichert wird. Am Träger 19 oder Stützrahmen 17 kann ein gegebenenfalls abnehmbarer, seitlich bis über den Sitzbereich des eingefahrenen Rollstuhles reichender Hebel angebracht sein, so daß der Rollstuhlfahrer diesen Handhebel ergreifen und sich Hand über Hand unter Kippverstellung des Rollstuhles um die Achse 22 zum Adapter 3 ziehen kann, bis die Rückenlehne 7 am Rahmen 17 aufliegt und die Teile 18 einrasten. Sowohl in dieser Kipplage als auch in der durch den Eingriff der Anschlagrolle 29 in die Führungsbahn 30 gesicherten Stellung kann das Fahrwerk durch Betätigung der Hebel 32 bzw. 33 wahlweise angehoben werden. In der Betriebsstellung nach Fig. 3 wird der Rollstuhl über das Fahrwerk 2 angehoben und kann nun durch Ein-und Ausschalten der Raupenantriebe des Fahrzeuges verfahren werden. Bei gekipptem Rollstuhl, sind wie im Zusammenhang mit Fig. 2 beschrieben, bei angehobenem Fahrwerk 2 und ausgefahrener Rolle 40 Wendemanöver möglich. Eine nicht dargestellte Schaltvorrichtung für den Raupenantrieb kann mit einer Sperre versehen sein, die das Einschalten des Antriebes bei angehobenem Raupenfahrwerk verhindert, um Unfälle auszuschließen.

Die abgeflachte Seite der Kurbelscheibe 34 kann wenigstens in der einen Übertotpunktstellung mit einem Anschlag zusammenwirken und dadurch zusätzlich gesichert werden.

Der Adapter 3 kann mit Einstelleinrichtungen zur Anpassung an verschiedene Höhen und Breiten der verwendeten Rollstühle 1 versehen sein. Es ist unter anderem möglich, den Träger 19 gegenüber der Tragplatte 36 der Höhe nach einstellbar anzubringen, wobei man eine Schnappverriegelung für die gewählte Einstellung vorsehen kann. Durch diese Höheneinstellung wird unter anderem der Kupplungszapfen 21 auf die Höhe der Aufsteckhülse 27 ausgerichtet.

Wie bereits eingangs ausgeführt, gilt es auch Vorkehrungen zu treffen, das Kippen des Fahrgestells samt Rollstuhl und Rollstuhlfahrer beim Übertritt über eine vom Ebenen zum Gefälle führenden Kante abzubremsen bzw. zu dämpfen, um unerwünscht große Kippmomente zu vermeiden. Zu diesem Zweck ist oben vorgeschlagen worden, das Raupenfahrwerk mit konkavgebogenen Führungsschienen für die in Bodeneingriff stehenden Raupentrume auszubilden, wobei diese Raupentrume entweder den Schienen dauernd folgend geführt werden oder über die Wölbung mit Hilfe eigener Spanneinrichtungen gespannt sind, so daß sie sich nur bei punktförmiger Belastung an die gewölbten Führungsschienen anlegen.

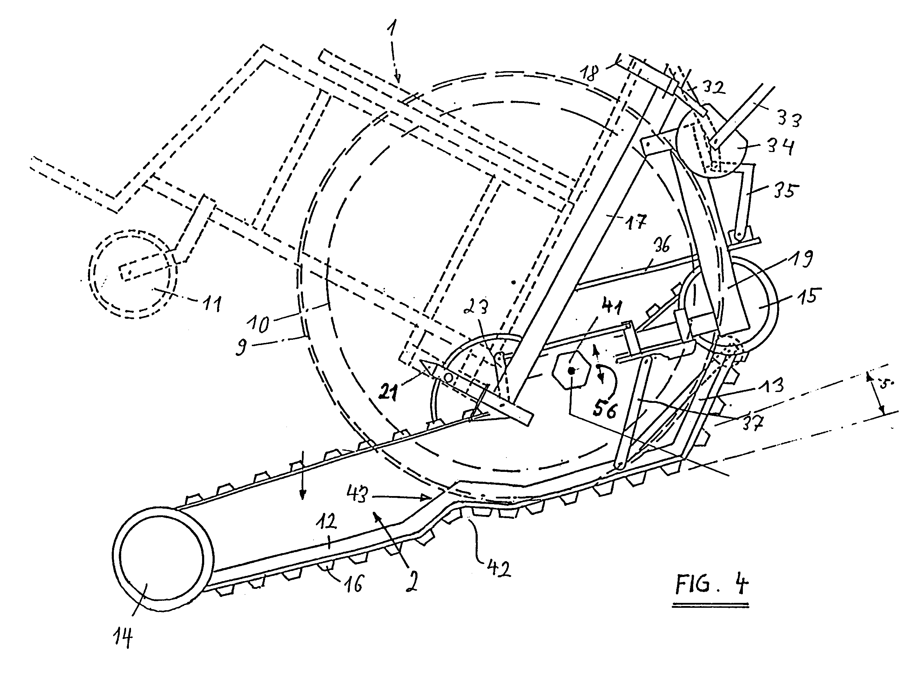

Das gleiche Ziel läßt sich durch die Ausführungsform nach Fig. 4 erreichen, die dadurch gekennzeichnet ist, daß die Führungsschienen 12 für die im Bodeneingriff stehenden Raupentrume im Bereich des Gesamtschwerpunktes von Fahrwerk 2, Adapter 3, Rollstuhl 1 und nichtdargestelltem Rollstuhlfahrer jeweils nach innen, d. h. in Richtung zum Obertrum der Raupen 16 hin eingebuchtet bzw. geknickt ausgebildet sind. Der entsprechende Knick in den bodenseitigen Führungsschienen 12 ist in Fig. 4 mit der Bezugsziffer 43 gekennzeichnet. Durch diese Maßnahmen läßt sich der Kippvorgang beim Übertritt des Fahrwerks 2 über eine vom Ebenen zum Gefälle führenden Kante 42 stabilisieren, da der Kippwinkel bei dieser Ausführungsform um einige Grad, z. B. 4° bis 7°, insbesondere etwa 5°, wie bei der dargestellten Ausführungsform, verringert ist. Diese Reduzierung des Kippwinkels ergibt sich dadurch, daß die Kante 42 im Bereich des Schienenknicks 43 zum Gesamtschwerpunkt hin verlagert wird, wobei diese Verlagerung eingeleitet wird, bevor der Gesamtschwerpunkt über die Kante 42 hinwegbewegt worden ist.

Um den Raupenuntertrumen die Möglichkeit zu geben, dem Schienenknick 43 beim Überfahren der Kante 42 zu folgen, ist es von Vorteil, die die Horizontalführung der Raupenobertrume gewährleistenden Stützrollen 41 unter elastischer Vorspannung gegen die Raupen 16 bzw. die Obertrume derselben zu drücken. Diese elastische Vorspannung ist in Fig. 4 mit dem Doppelpfeil 56 gekennzeichnet.

Im übrigen entspricht die Rollstuhl-Raupenfahrwerkkombination nach Fig. 4 derjenigen nach den Fig. 1 bis 3, so daß hinsichtlich aller übrigen Teile bzw. Elemente auf die entsprechende Beschreibung der Fig. 1 bis 3 verwiesen werden kann.

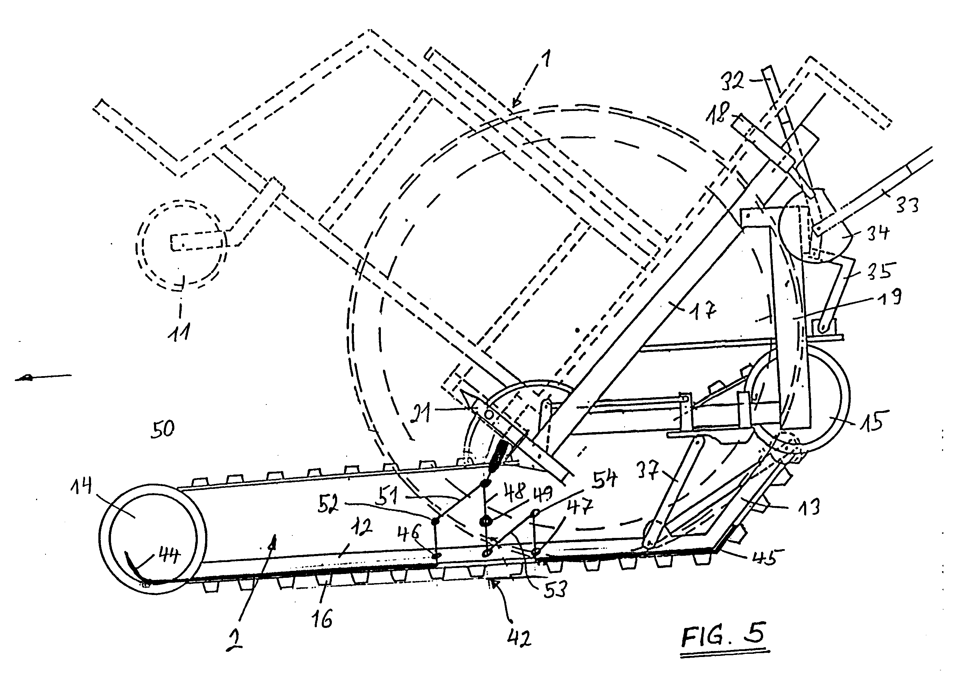

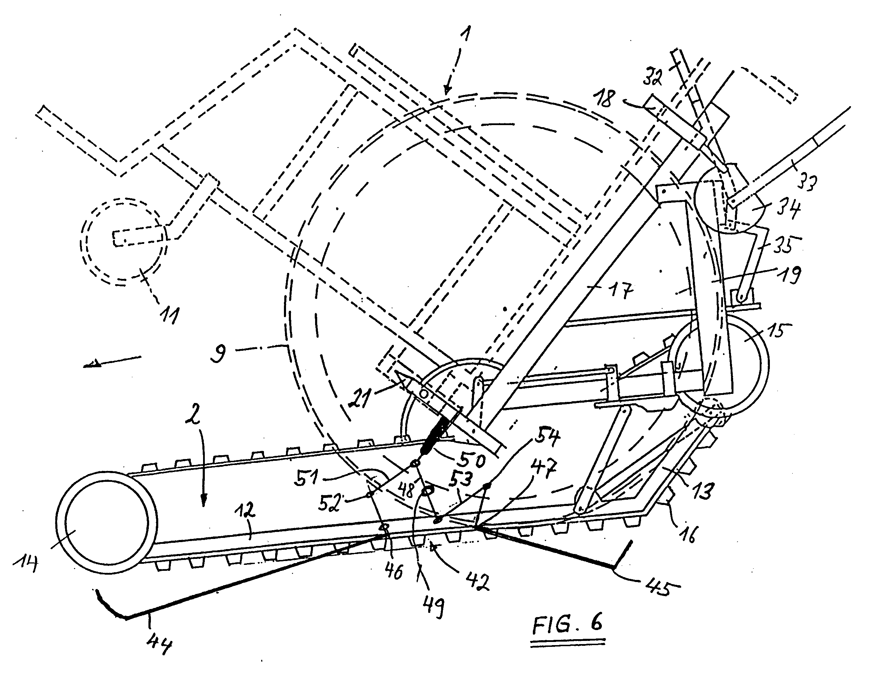

Anhand der Fig. 5 bis 7 soll eine weitere Variante der Rollstuhl-Raupenfahrwerkkombination erläutert werden, die sich dadurch auszeichnet, daß sowohl im vorderen als auch hinteren Bereich des Fahrgestells 2 an diesem eine Einrichtung zum abgebremsten Kippen des Fahrwerks 2 beim Übertritt desselben über eine vom Ebenen zum Gefälle und umgekehrt führenden Kante 42 angeordnet ist. Die erwähnte Einrichtung zum abgebremsten Kippen des Fahrwerks 2 beim Übertritt von einer Ebenen in ein Gefälle umfaßt eine vor dem Gesamtschwerpunkt von Fahrgestell 2, Adapter 3, Rollstuhl 1 und Rollstuhlfahrer am Fahrgestell 2 um eine horizontale Querachse 46 schwenkbar gelagerte Stützschiene 44 derart, daß diese beim Übertritt über die vom Ebenen zum Gefälle führende Kante 42 mit ihrem vorderen Ende unter Anlage an das Gefälle bzw. die unteren Stufenkanten nach unten über die durch die unteren Raupentrume gebildete Ebene hinausschwenkbar ist. Diese Stellung ist in Fig. 6 angedeutet. Vorzugsweise sind jeweils zwei sich parallel zueinander erstreckende Stützschienen 44 vorgesehen, die zwischen den beiden Raupen 16 im Abstand voneinander angeordnet sind. Die Schwenkachse 46 erstreckt sich im Bereich der bodenseitigen Führungsschienen 12 bzw. ist bei der dargestellten Ausführungsform an diesem befestigt. Das vordere freie Ende der Stützschienen 44 ist nach Art einer Schaufelspitze eines Langlauf- oder Alpinskis nach oben gebogen. In gleicher Weise ist die Einrichtung zum abgebremsten Kippen des Fahrwerks 2 beim Übertritt vom Gefälle zur Ebene ausgebildet. Diese umfaßt eine hinter dem Gesamtschwerpunkt von Fahrgestell 2, Adapter 3, Rollstuhl 1 und Rollstuhlfahrer am Fahrgestell 2 um eine horizontale Querachse 47 schwenkbar gelagerte Stützschiene 45, derart, daß diese beim Übertritt über die vom Gefälle zur Ebene führende Kante 42 mit ihrem hinteren bzw. freien Ende unter Anlage an die Ebene nach unten über die durch die unteren Raupentrume gebildete Ebene hinausschwenkbar ist. Auch in diesem Falle sind vorteilhafterweise zwei sich parallel zueinander erstreckende Stützschienen 45 vorgesehen, die zwischen den beiden Raupen 16 im Abstand voneinander angeordnet bzw. gelagert sind. Auch die Schwenkachse 47 ist an den beiden Führungsschienen 12 befestigt. Schließlich ist das freie Ende der Stützschienen 45 ebenfalls nach Art einer Schaufelspitze eines Skis nach oben gebogen. Insofern gleichen sich die Stützschienen 44 und 45 hinsichtlich ihrer Lagerung am Fahrgestell sowie hinsichtlich ihrer Form.

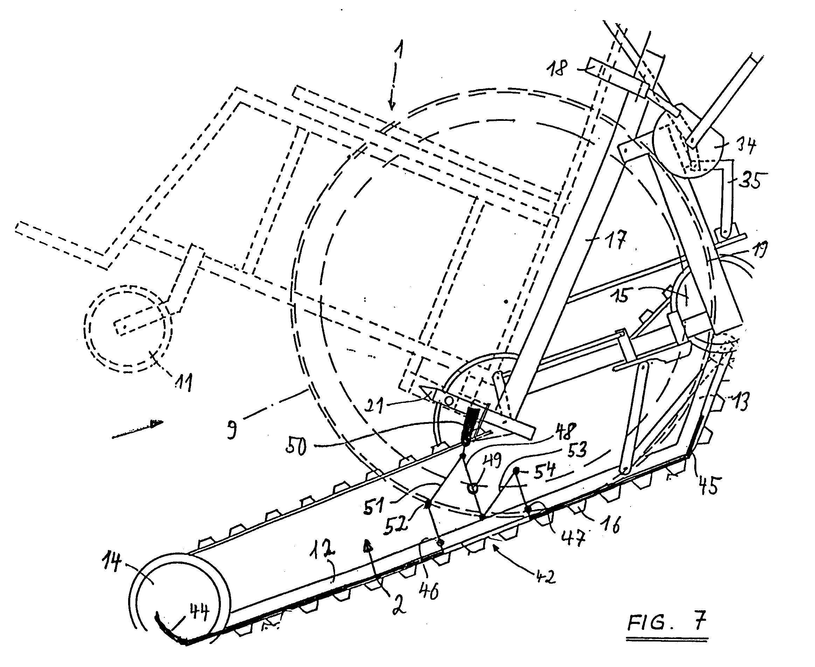

Die vorderen und hinteren Stützschienen 44, 45 sind über ein die Schwenkbewegung gemeinsam steuerndes Gestänge 48, 41, 53 miteinander verbunden, wobei an diesem Gestänge ein Dämpfelement in Form eines Gasdruckdämpfers 50 angeschlossen ist. Konkret besteht das erwähnte Gestänge aus einem um eine Horizontalachse 49 schwenkbaren Doppelhebel 48, an dessen freien Enden jeweils ein Lenker 51 bzw. 53 angelenkt ist, wobei ersterer mit den vorderen Stützschienen 44 und letzterer mit den hinteren Stützschienen 45 verbunden ist, und zwar über Gelenke 52 bzw. 54. Die Anlenkung der Lenker 51 und 53 an den vorderen bzw. hinteren Stützschienen 44, 45 erfolgt jeweils oberhalb der Schwenkachsen 46, 47 am Fahrgestell 2 bzw. an den bodenseitigen Führungsschienen 12. Auf diese Weise ist gewährleistet, daß die vorderen und hinteren Stützschienen 44, 45 jeweils gemeinsam aus der durch die Raupenuntertrume gebildeten Ebene heraus bzw. in diese Ebene wieder zurückgeschwenkt werden. Das erwähnte Dämpfelement 50 greift bei dem dargestellten Ausführungsbeispiel im Bereich der Anlenkung des Lenkers 51 am Doppelhebel 48 an, und zwar derart, daß im eingezogenen bzw. zurückgeschwenkten Zustand der Stützschienen 44, 45, wie in den Fig. 5 und 7 dargestellt, auf diese nur ein geringer "Öffnungsdruck" ausgeübt wird. Dieser "Öffnungsdruck" nimmt zu, je weiter die Stützschienen 44, 45 nach unten ausschwenken mit der Folge, daß sich die durch die Stützschienen 44, 45 bewirkte Dämpfung entsprechend erhöht. Vorzugsweise ist die Unterseite der Stützschienen 44, 45 poliert. Statt der Stützschienen 44, 45 können auch entsprechend ausgebildete, umlaufende Stützbänder oder Stützrollen vorgesehen sein.

Die erwähnte Kipp-Dämpfung kann auch dadurch erzielt werden, daß im Bereich der dem Doppelhebel 48 zugeordneten Horizontalachse 49 eine Freilauf- oder Fliegkraftbremse angeordnet ist, durch die das Zurückschwenken der Stützschienen 44, 45 unter Belastung abgebremst wird.

Vorzugsweise sind die Stützschienen 44, 45 in zurückgezogener bzw. zurückgeschwenkter Stellung mechanisch, elektomechanisch oder elektromagnetisch blockierbar.

Des weiteren ist denkbar, daß die Stromzufuhr zum Antriebsmotor des Fahrgestells 2 unterbrochen wird, sobald die Stützschienen 44, 45 nach unten ausschwenken. Auf diese Weise ist sichergestellt, daß das Fahrgestell 2 nicht zu schnell über die erwähnte Kante 42 fährt. Die Fahrt kann erst dann wieder fortgesetzt werden, nachdem der Kippvorgang beendet ist und die Stützschienen 44, 45 wieder eingezogen sind.

In ähnlicher Weise könnte auch bei der Ausführungsform nach Fig. 4 die Stromführung zum Antriebsmotor unterbrochen werden. In diesem Fall müßte dem Schienenknick 43 ein entsprechender Drucksensor oder dergleichen zugeordnet sein.

Sämtliche in den Anmeldungsunterlagen offenbarten Merkmale werden als erfindungswesentlich beansprucht, soweit sie einzeln oder in Kombination gegenüber dem Stand der Technik neu sind.

## Patentansprüche

1. Mit einem Rollstuhl (1) kuppelbares Raupenfahrwerk (2, 3), insbesondere für das Befahren von Treppen, dessen die motorisch antreibbaren Raupen (16) aufweisender und zwischen die Haupträder (9) des Rollstuhles (1) passender Fahrwerkteil mit einem Adapter (3) zur Befestigung des Rollstuhles (1) in einer nach hinten gekippten Fahrstellung, in der die Rollstuhlräder (9, 11) vom Boden abgehoben sind, verbunden ist,
dadurch gekennzeichnet,
daß der eine Einfahrkupplung (21) für eine entsprechende, am Rollstuhl angebrachte Gegenkupplung (27) aufweisende Adapter (3) mit dem Fahrwerksteil (2) über eine Hubeinrichtung (31 bis 35) verbunden ist, die vom Rollstuhlfahrer über Betätigungs- oder Steuerorgane (32, 33) wahlweise im Sinne eines Anhebens des Rollstuhles (1) gegenüber dem Fahrwerk (2) und im Sinne eines Abhebens des Fahrwerkes (2) bei am Boden verbleibenden Haupträdern (9), sowohl bei in der normalen als auch bei in der gekippten Fahrstellung befindlichem Rollstuhl betätigbar ist.

2. Raupenfahrwerk nach Anspruch 1,
dadurch gekennzeichnet,
daß für die Hubeinrichtung (31 bis 35) in Reichweite des Rollstuhlfahrers am Adapter (3) angebrachte, gegebenenfalls teleskopisch ausziehbare Betätigungshebel (32, 33) vorgesehen sind.

3. Raupenfahrwerk nach den Ansprüchen 1 und 2, dadurch gekennzeichnet, daß die Hubeinrichtung (31 bis 35) als Hebelwerk ausgebildet ist, das über ein Gesperre (34, 35) in den beiden Hubstellungen feststellbar ist.

4. Raupenfahrwerk nach einem der Ansprüche 1 bis 3, dadurch gekennzeichnet, daß am Adapter (3) wenigstens eine etwa horizontal seitlich bis über den Sitzbereich des in der normalen Fahrstellung befindlichen Rollstuhles vorragende, gegebenenfalls abnehmbare Haltestange ausgebildet ist.

5. Raupenfahrwerk nach einem der Ansprüche 1 bis 4, dadurch gekennzeichnet, daß der Adapter (3) einen feststehenden schrägen Stützrahmen (17) des Adapters (3) zur Abstützung des Rollstuhles (1) in seiner gekippten Fahrstellung aufweist, an welchem Stützrahmen selbsttätig einrastende Sicherungshalterungen (18) für die Rollstuhllehne bzw. dort angebrachte Gegenhalter vorgesehen sind.

6. Raupenfahrwerk nach einem der Ansprüche 1 bis 5, dadurch gekennzeichnet, daß die Einfahrkupplung aus wenigstens einem am Adapter (3) angebrachten, sich vorzugsweise zum freien Ende konisch verjüngenden Steckzapfen (21) besteht, auf den in seiner etwa horizontal in Einfahrtrichtung des Rollstuhles (1) weisenden Einkupplungsstellung eine die Gegenkupplung bildende, am Rollstuhl (1) unterhalb des Sitzbereiches angebrachte Aufsteckhülse (27) bis zu einem Anschlag (28) aufsteckbar ist, wobei der Steckzapfen um eine die Kippachse für den Rollstuhl bestimmende Querachse (22) schwenkbar lagert und am Adapter in einem Kreisbogen um die Schwenkachse eine Führungsbahn (30) für einen vorzugsweise von einer Laufrolle oder einem Kugellager (29) gebildeten, am Rollstuhl vorgesehenen Anschlag vorgesehen ist, der in der Kupplungsstellung von Steckzapfen (21) und Aufsteckhülse (27) mit dieser Führungsbahn (30) in Eingriff steht und Bolzen (21) und Hülse (27) in der Einkupplungsstellung und damit den Rollstuhl (1) am Adapter (3) sichert.

7. Raupenfahrwerk nach einem der Ansprüche 1 bis 6, dadurch gekennzeichnet, daß am Fahrwerk (2) bzw. Adapter (3) eine vor dem unter der Rückenlehne (7) des gekippten Rollstuhles (1) liegenden Fahrwerkende über einen Stelltrieb an den Boden anstellbare Stützrolle (40) angebracht ist.

8. Raupenfahrwerk nach Anspruch 7, dadurch gekennzeichnet, daß die Stützrolle (40) nach Art eines Sporen- oder Möbelrades um eine stehende Achse schwenkbar angebracht bzw. als Kugelrolle ausgebildet ist.

9. Raupenfahrwerk nach Anspruch 7 oder 8, dadurch gekennzeichnet, daß der Stelltrieb (23 bis 26, 37, 38) der Stützrolle (40) mit dem Kupplungszapfen (21) oder einem eigenen Lagefühler für den Rollstuhl (1) antriebsverbunden ist, so daß er die Stützrolle beim Kippen des Rollstuhles (1) und/oder Anheben des Fahrwerkes (2) bei gekipptem Rollstuhl (1) ausstellt und bei in seiner normalen Fahrstellung befindlichem Rollstuhl (1) vom Boden abhebt.

10. Raupenfahrwerk nach einem der Ansprüche 1 bis 9, dadurch gekennzeichnet, daß das Raupenfahrwerk (2) konkav gebogene Führungsschienen (12) für die im Bodeneingriff stehenden Raupentrume aufweist.

11. Raupenfahrwerk nach einem der Ansprüche 1 bis 10, dadurch gekennzeichnet, daß der Fahrwerksteil der Länge nach in zwei oder mehrere getrennt antreibbare und um eine Querachse gelenkig miteinander verbundene Raupengruppen unterteilt ist.

12. Raupenfahrwerk nach einem der Ansprüche 1 bis 9, dadurch gekennzeichnet, daß die Führungsschienen (12) für die im Bodeneingriff stehenden Raupentrume im Bereich des Gesamtschwerpunktes von Fahrwerk (2), Adapter (3), Rollstuhl (1) und Rollstuhlfahrer jeweils nach innen, d. h. in Richtung zum Obertrum der Raupen (16) hin eingebuchtet, insbesondere geknickt (Schienenknick 43) ausgebildet sind.

13. Raupenfahrwerk nach Anspruch 12, dadurch gekennzeichnet, daß die die Horizontalführung der Raupenobertrume gewährleistenden Stützrollen (41) unter elastischer Vorspannung gegen die Raupen

(16) bzw. die Obertrume derselben gedrückt sind.

14. Raupenfahrwerk nach einem der Ansprüche 1 bis 10 und 12, 13,
dadurch gekennzeichnet,
daß im vorderen Bereich des Fahrgestells (2) an diesem eine Einrichtung zum abgebremsten Kippen des Fahrwerks (2) beim Übertritt desselben über eine vom Ebenen zum Gefälle führenden Kante (42) angeordnet ist.

15. Raupenfahrwerk nach Anspruch 14,
dadurch gekennzeichnet,
daß die Einrichtung zum abgebremsten Kippen des Fahrwerks (2) eine vor dem Gesamtschwerpunkt von Fahrgestell (2), Adapter (3), Rollstuhl (1) und Rollstuhlfahrer am Fahrgestell (2) um eine sich horizontal und quer zur Fahrwerklängsrichtung erstreckende Achse (46) schwenkbar gelagerte Stützschiene (44) oder dergleichen umfaßt, derart, daß diese beim Übertritt des Fahrwerks (2) über die vom Ebenen zum Gefälle führende Kante (42) unter Anlage an das Gefälle bzw. unter Anlage an tiefer gelegene Stufenkanten nach unten über die durch die unteren Raupentrume gebildete Ebene hinaus schwenkbar ist.

16. Raupenfahrwerk nach Anspruch 15,
dadurch gekennzeichnet,
daß die Stützschiene (44) mit einem Dämpfelement, insbesondere einem Gasdruckdämpfer (50), gekoppelt ist.

17. Raupenfahrwerk nach einem der Ansprüche 14 bis 16,
dadurch gekennzeichnet,
daß die vordere Stützschiene (44) oder dergleichen mit einer hinter dem Gesamtschwerpunkt am Fahrgestell (2) angelenkten hinteren Stützschiene (45) gekoppelt ist, die zur Dämpfung der Kippbewegung des Fahrgestells (2) beim Übertritt über eine vom Gefälle zur Ebene führende Kante (42) dient.

18. Raupenfahrwerk nach Anspruch 17,
dadurch gekennzeichnet,
daß die vordere und hintere Stützschiene (44, 45) über ein die Schwenkbewegung gemeinsam steuerndes Gestänge (48, 51, 53) miteinander verbunden sind, wobei das Dämpfelement (50) an dem gemeinsamen Gestänge angeschlossen ist.

19. Raupenfahrwerk nach Anspruch 18,
dadurch gekennzeichnet,
daß das Dämpfelement (50) die beiden Stützschienen (44, 45) mit zunehmender Ausschwenkung in Richtung derselben entsprechend zunehmend, und zwar linear oder progressiv, vorspannt.

**Claims**

1. Endless-track vehicle (2, 3) capable of being coupled to a wheelchair (1), in particular for travelling up and down steps, whose vehicle part having the motor-drivable endless track (16) and fitting between the main wheels (9) of the wheelchair (1) is connected to an adapter (3) for fixing the wheelchair (1) in a driving position tilted to the rear, in which the wheelchair wheels (9, 11) are raised from the ground, characterised in that the adapter (3) having an insertion coupling (21) for a corresponding counter-coupling (27) mounted on the wheelchair is connected to the vehicle part (2) via a lifting device (31 to 35), which is actuatable by the wheelchair driver via actuating or control elements (32, 33) selectively in the direction of lifting of the wheelchair (1) relative to the vehicle (2) and in the direction of lowering of the vehicle (2) with the main wheels (9) remaining on the ground, both when the wheelchair is in the normal and in the tilted driving position.

2. Endless track vehicle according to claim 1, characterised in that optionally telescopically extensible actuating levers (32, 33), mounted on the adapter (3) within reach of the wheelchair driver, are provided for the lifting device (31 to 35).

3. Endless-track vehicle according to claims 1 and 2, characterised in that the lifting device (31 to 35) is formed as a lever mechanism which is fixable in the two lifting positions via a safety catch (34, 35).

4. Endless-track vehicle according to one of claims 1 to 3, characterised in that at least one optionally detachable stay bar projecting approximately laterally horizontally over the seat region of the wheelchair located in the normal driving position is formed on the adapter (3).

5. Endless-track vehicle according to one of claims 1 to 4, characterised in that the adapter (3) has a fixed, slanting support frame (17) of the adapter (3) for supporting the wheelchair (1) in its tilted driving position, on which support frame automatically engaging safety fixings (18) are provided for the wheelchair back or counter-fixings mounted thereon.

6. Endless-track vehicle according to one of claims 1 to 5, characterised in that the insertion coupling consists of at least one centre spigot (21), preferably tapering conically towards the free end, which centre spigot is mounted on the adapter (3) and on to which, in its engagement position facing approximately horizontally in the direction of entry of the wheelchair (1), a push-on sleeve (27) forming the counter-coupling and mounted on the wheelchair (1) below the seat region can be pushed as far as a stop (28), the centre spigot being pivotably mounted about a transverse axis (22) defining the tilt axis for the wheelchair and a guide track (30) for a stop, preferably formed of a track roller or ball bearing (29) and provided on the wheelchair, being provided on the adapter in an arc around the pivotal axis, the stop engaging in the coupling position of the centre spigot (21) and the push-on sleeve (27) with said guide track (30) so as to fix the bolts (21) and the sleeve (27) in the coupling position, and thus fixing the wheelchair (1) to the adapter (3).

7. Endless-track vehicle according to one of claims 1 to 6, characterised in that a support roller (40) adjustable on the ground via an actuator in front of the vehicle end lying below the back (7) of the tilted wheelchair (1) is mounted on the vehicle (2) or adapter (3).

8. Endless-track vehicle according to claim 7, characterised in that the support roller (40) is mounted pivotably about a fixed axis in the manner of a tail wheel or furniture wheel or is formed as a ball caster.

9. Endless-track vehicle according to claim 7 or 8, characterised in that the actuator (23 to 26, 37, 38) of the support roller (40) is drivingly connected to the coupling spigot (21) or an own position sensor for the wheelchair (1), so that it exposes the support roller during tilting of the wheelchair (1) and/or lifting of the vehicle (2) with the wheelchair (1) tilted and lifts the support roller from the ground when the wheelchair (1) is in its normal driving position.

10. Endless-track vehicle according to one of claims 1 to 9, characterised in that the endless-track vehicle (2) has concavely curved guide rails (12) for the endless track sections engaged with the ground.

11. Endless-track vehicle according to one of claims 1 to 10, characterised in that the vehicle part is subdivided along its length into two or more separately drivable track groups pivotably connected together about a transverse axis.

12. Endless-track vehicle according to one of claims 1 to 9, characterised in that the guide rails (12) for the track sections engaged with the ground are each curved inwards, i.e. in the direction of the upper section of the tracks (16), and are in particular bent (rail bend 43), in the region of the general centre of gravity of the vehicle (2), adapter (3), wheelchair (1) and wheelchair driver.

13. Endless-track vehicle according to claim 12, characterised in that the support rollers (41) ensuring horizontal guiding of the track upper sections are pressed with resilient biasing against the endless tracks (16) or upper sections thereof.

14. Endless-track vehicle according to one of claims 1 to 10 and 12, 13, characterised in that a device for the braked tilting of the vehicle (2) when said vehicle crosses an edge (42) leading from the level to the incline is mounted on the vehicle (2) in the front region thereof.

15. Endless-track vehicle according to claim 14, characterised in that the device for the braked tilting of the vehicle (2) comprises a support rail (44) or the like pivotably mounted on the vehicle (2) about an axis (46) extending horizontally and transverse to the vehicle longitudinal direction in front of the general centre of gravity of the vehicle (2), adapter (3), wheelchair (1) and wheelchair driver, in such a manner that, when the vehicle (2) crosses over the edge (42) leading from the level to the incline, said support rail is pivotable downwards, beyond the plane formed by the lower track sections, whilst bearing against the incline or bearing against less elevated step edges.

16. Endless-track vehicle according to claim 15, characterised in that the support rail (44) is coupled to a damping element, in particular a gas pressure damper (50).

17. Endless-track vehicle according to one of claims 14 to 16, characterised in that the front support rail (44) or the like is coupled to a rear support rail (45), which is pivotably connected to the vehicle (2) behind the general centre of gravity and which is for damping the tilting movement of the vehicle (2) when said vehicle crosses over the edge (42) leading from the level to the incline.

**18.** Endless-track vehicle according to claim 17, characterised in that the front and rear support rails (44, 45) are connected together via a linkage (48, 51, 53) commonly controlling the pivoting movement, the damping element (50) being attached to the common linkage.

**19.** Endless-track vehicle according to claim 18, characterised in that the damping element (50) biases the two support rails (44, 45) with increasing pivoting out in the direction thereof in a correspondingly increasing, in particular linear or progressive, manner.

**Revendications**

**1.** Véhicule à chenilles (2, 3) pouvant être couplé avec un fauteuil roulant (1), en particulier pour le franchissement d'escaliers, dont le mécanisme de roulement qui comprend les chenilles (16) motorisées et s'adapte entre les roues principales (9) du fauteuil roulant (1) est couplé avec un adaptateur (3) pour la fixation du fauteuil roulant (1) dans une position de roulement inclinée vers l'arrière et dans laquelle les roues (9, 11) du fauteuil roulant sont dégagées du sol, **caractérisé en ce** que l'adaptateur (3) équipé d'un dispositif d'accouplement d'entrée (21) pour un dispositif d'accouplement conjugué (27) correspondant monté sur le fauteuil roulant est couplé avec le mécanisme de roulement (2) par l'intermédiaire d'un dispositif de levage (31 à 35) qui, par l'intermédiaire d'organes de manoeuvre ou de commande (32, 33), peut être actionné sélectivement par l'utilisateur du fauteuil roulant dans le sens d'un soulèvement du fauteuil roulant (1) par rapport au mécanisme de roulement (2) et dans le sens d'un soulèvement du mécanisme de roulement (2), les roues principales (9) restant au sol, et cela dans la position de marche normale aussi bien qu'inclinée.

**2.** Véhicule à chenilles selon la revendication 1, caractérisé en ce qu'il comprend pour le dispositif de levage (31 à 35) des leviers de manoeuvre (32, 33), éventuellement télescopiques, disposés sur l'adaptateur (3), à portée de l'utilisateur du fauteuil roulant.

**3.** Véhicule à chenilles selon l'une des revendications 1 et 2, caractérisé en ce que le dispositif de levage (31 à 35) est conformé en appareil à leviers lequel peut être bloqué dans les deux positions de levage par l'intermédiaire d'un encliquetage (34, 35).

**4.** Véhicule à chenilles selon l'une des revendications 1 à 3, caractérisé en ce que sur l'adaptateur (3) est conformée au moins une barre de retenue, éventuellement amovible, qui dépasse à peu près horizontalement et latéralement jusqu'au-delà de la région du siège du fauteuil roulant placé dans la position de marche normale.

**5.** Véhicule à chenilles selon l'une des revendications 1 à 4, caractérisé en ce que l'adaptateur (3) comporte un cadre porteur (17) incliné stationnaire pour maintenir le fauteuil roulant (1) dans sa position inclinée, lequel cadre porteur est équipé de fixations de sécurité (18) à enclenchement automatique pour le dossier du fauteuil roulant et respectivement pour des supports conjugués prévus à cet endroit.

**6.** Véhicule à chenilles selon l'une des revendications 1 à 5, caractérisé en ce que le dispositif d'accouplement d'entrée est constitué par au moins un pivot d'emboîtement (21) monté sur l'adaptateur (3) et se rétrécissant de manière conique, de préférence en direction de l'extrémité libre, sur lequel peut être emboîtée jusqu'à une butée (28), dans sa position d'accouplement orientée sensiblement horizontalement dans la direction d'entrée du fauteuil roulant (1), une douille emboîtable (27) qui constitue le dispositif d'accouplement conjugué et est montée sur le fauteuil roulant (1) au-dessous de la région du siège, le pivot à emboîtement pouvant pivoter autour d'un axe transversal (22) définissant l'axe d'inclinaison pour le fauteuil roulant et une glissière (30) étant prévue sur l'adaptateur dans un arc de cercle autour de l'axe de pivotement, pour une butée prévue sur le fauteuil roulant et constituée de préférence d'un galet de roulement ou d'un roulement à billes (29), qui, dans la position d'accouplement du pivot à emboîtement (21) et de la douille emboîtable (27), est en prise avec ladite glissière (30) et bloque le pivot (21) et la douille (27) dans la position d'accouplement et donc le fauteuil roulant (1) sur l'adaptateur (3).

**7.** Véhicule à chenilles selon l'une des revendications 1 à 6, caractérisé en ce que sur le mécanisme de roulement (2) et respectivement sur l'adaptateur (3) est monté un galet support (40) qui peut être mis en contact avec le sol par l'intermédiaire d'un mécanisme de commande en avant de l'extrémité du mécanisme de roulement située sous le dossier (7) du fauteuil roulant (1) basculé.

**8.** Véhicule à chenilles selon la revendication 7, caractérisé en ce que le galet support (40) est monté, à la manière d'une roue de béquille ou d'une roulette pour meubles, de façon à pouvoir pivoter autour d'un axe vertical ou conformé en roulette.

9. Véhicule à chenilles selon l'une des revendications 7 ou 8, caractérisé en ce que l'organe de commande (23 à 26, 37, 38) du galet support (40) est couplé en entraînement avec le pivot d'accouplement (21) ou avec un capteur de position séparé pour le fauteuil roulant (1), de manière qu'il sort le galet support lors du basculement du fauteuil roulant (1) et/ou lors du soulèvement du mécanisme de roulement (2) lorsque le fauteuil roulant (1) se trouve dans la position basculée, et qu'il soulève ledit galet support du sol lorsque le fauteuil roulant (1) se trouve dans sa position de marche normale.

10. Véhicule à chenilles selon l'une des revendications 1 à 9, caractérisé en ce que le mécanisme à chenilles (2) comporte des rails de guidage (12) à courbure concave pour les brins de chenille en contact avec le sol.

11. Véhicule à chenilles selon l'une des revendications 1 à 10, caractérisé en ce que le mécanisme de roulement est divisé dans le sens de la longueur en deux ou plusieurs groupes de chenilles qui peuvent être entraînés séparément et qui sont articulés entre eux autour d'un axe transversal.

12. Véhicule à chenilles selon l'une des revendications 1 à 9, caractérisé en ce que les rails de guidage (12) pour les brins de chenilles en contact avec le sol présentent respectivement dans la région du centre de gravité de l'ensemble constitué par le mécanisme de roulement (2), l'adaptateur (3), le fauteuil roulant (1) et l'utilisateur du fauteuil roulant, des anfractuosités orientées vers l'intérieur, c'est-à-dire en direction du brin supérieur des chenilles (16), et notamment des coudes (coude de rail 43).

13. Véhicule à chenilles selon la revendication 12, caractérisé en ce que les galets supports (41) qui assurent le guidage horizontal des brins supérieurs des chenilles sont appliqués sous précontrainte élastique contre les chenilles (16) et respectivement contre les brins supérieurs de celles-ci.

14. Véhicule à chenilles selon l'une des revendications 1 à 10 et 12, 13, caractérisé en ce que dans la partie antérieure du mécanisme de roulement (2), celui-ci est muni d'un dispositif pour le basculement freiné du mécanisme de roulement (2) lorsque celui-ci franchit une arête (42) menant d'un plan horizontal à une pente.

15. Véhicule à chenilles selon la revendication 14, caractérisé en ce que le dispositif pour le basculement freiné du mécanisme de roulement (2) comprend un rail de support (44) ou analogue monté sur le mécanisme de roulement (2), en avant du centre de gravité de l'ensemble constitué par le mécanisme de roulement (2), l'adaptateur (3), le fauteuil roulant (1) et l'utilisateur du fauteuil roulant, de façon à pouvoir pivoter autour d'un axe (46) qui s'étend horizontalement et transversalement à la direction du mécanisme de roulement, de telle façon que, lorsque le mécanisme de roulement (2) franchit l'arête (42) menant d'un plan horizontal à une pente, ledit rail de support peut pivoter vers le bas au-delà du plan formé par les brins inférieurs des chenilles, avec application contre la pente et respectivement avec application contre des bords de marches situés plus bas.

16. Véhicule à chenilles selon la revendication 15, caractérisé en ce que le rail de support (44) est couplé avec un élément amortisseur, en particulier avec un amortisseur pneumatique (50).

17. Véhicule à chenilles selon l'une des revendications 14 à 16, caractérisé en ce que le rail de support antérieur (44) ou analogue est couplé avec un rail de support postérieur (45) articulé sur le mécanisme de roulement (2), en arrière du centre de gravité de l'ensemble, qui sert à amortir le mouvement basculant du mécanisme de roulement (2) lors du franchissement d'une arête (42) menant de la pente à un plan horizontal.

18. Véhicule à chenilles selon la revendication 17, caractérisé en ce que les rails de support antérieur et postérieur (44, 45) sont reliés entre eux par l'intermédiaire de tringles (48, 51, 53) qui commandent ensemble le mouvement pivotant, l'élément amortisseur (50) étant raccordé aux tringles communes.

19. Véhicule à chenilles selon la revendication 18, caractérisé en ce que l'élément amortisseur (50) assure une mise en précontrainte croissante, linéaire ou progressive, des deux rails de support (44, 45) au fur et à mesure que le pivotement en direction de ceux-ci augmente.

FIG.1

FIG.2

FIG.3

FIG. 4

EP 0 312 961 B1

FIG. 5

FIG. 6

EP 0 312 961 B1

FIG. 7